# EUROPEAN PATENT APPLICATION

(11) **EP 4 668 916 A1**
(43) Date of publication of application: **24.12.2025**
(21) Application number: 23922797.8
(22) Date of filing: 17.02.2023
(51) Int. Cl.: H04W 64/00, H04W 4/70, H04W 72/0446, H04W 72/0453

(54) **TERMINAL, COMMUNICATION METHOD, AND RADIO COMMUNICATION SYSTEM**

(71) Applicant: NTT DOCOMO, INC., Tokyo 100-6150 (JP)
(72) Inventor: SHIMA, Kousuke, Tokyo 100-6150 (JP); TAKEDA, Daiki, Tokyo 100-6150 (JP); OKAMURA, Masaya, Tokyo 100-6150 (JP); HARADA, Hiroki, Tokyo 100-6150 (JP); ECHIGO, Haruhi, Tokyo 100-6150 (JP)
(74) Representative: Hoffmann Eitle
(86) International application number: PCT/JP2023/005837
(87) International publication number: WO 2024/171463

(57) **Abstract**

A terminal includes: a control unit configured to determine a size of an overlap in a frequency domain between a first resource and a second resource, the first resource and the second resource corresponding to a reference signal used for positioning, and frequency hopping being applied to the reference signal; and a reception unit configured to receive the reference signal, based on the determined size. The control unit determines the size of the overlap between the first resource and the second resource, based on a gap in a time domain between the first resource and the second resource.

## Description

### TECHNICAL FIELD

The present invention relates to a terminal, a communication method, and a wireless communication system.

### BACKGROUND ART

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" is being discussed (hereinafter, the wireless communication method is referred to as "NR"). Various wireless technologies and network architectures are being discussed in order to satisfy the requirements in NR such as: a system with large capacity; highspeed data transmission; low latency; simultaneous connections of a large number of terminals; low cost; power saving; and the like (for example, Non-Patent Document 1).

In the 3GPP standardization, NR positioning is being discussed. In addition, positioning for the RedCap (Reduced Capability) UE (User Equipment) is being discussed. The RedCap UE uses a narrower band as compared with a normal UE, and thus, the positioning accuracy using a reference signal is expected to decrease. In order to compensate for the decreased positioning accuracy due to the reduced bandwidth for the RedCap UE, discussions are being held with respect to performing positioning by applying frequency hopping to reference signals used for positioning and by assuming the reference signals to be a signal with a single large bandwidth.

Furthermore, when frequency hopping is applied, the positioning accuracy can be degraded by the phase shift between the hopping resources. In order to compensate for the degradation of the positioning accuracy, a method of overlapping is being discussed in which frequencies are partially overlapped in each hopping resource.

### CITATION LIST

### Non-Patent Document

Non-Patent Document 1: 3GPP TS 38.300 V17.3.0 (2022-12)
Non-Patent Document 2: 3GPP TS 38.305 V17.3.0 (2022-12)
Non-Patent Document 3: 3GPP TS 38.455 V17.3.0 (2022-12)
Non-Patent Document 4: 3GPP TS 37.355 V17.3.0 (2022-12)
Non-Patent Document 5: 3GPP TS 23.032 V16.1.0 (2021-12)
Non-Patent Document 6: 3GPP TS 38.215 V17.3.0 (2022-12)
Non-Patent Document 7: 3GPP TS 38.331 V17.3.0 (2022-12)

### SUMMARY OF THE INVENTION

### TECHNICAL PROBLEM

However, in a case where frequency hopping accompanied by resource overlapping is applied to PRS/SRS, how to configure the overlap size between PRS/SRS resources has not been specified yet. As a result, there is a possibility that terminals of the conventional wireless communication system cannot perform transmission and reception of PRS/SRS to which frequency hopping accompanied by resource overlapping is applied.

### SOLUTION TO PROBLEM

A terminal according to an embodiment of the present invention includes: a control unit configured to determine a size of an overlap in a frequency domain between a first resource and a second resource, the first resource and the second resource corresponding to a reference signal used for positioning, and frequency hopping being applied to the reference signal; and a reception unit configured to receive the reference signal, based on the determined size. The control unit determines the size of the overlap between the first resource and the second resource, based on a gap in a time domain between the first resource and the second resource.

### ADVANTAGEOUS EFFECTS OF INVENTION

According to an embodiment of the present invention, a reference signal can be appropriately received based on an expectation in which the overlap size of resources, of a reference signal used for positioning to which frequency hopping accompanied by resource overlapping is applied, is appropriately expected.

### BRIEF DESCRIPTION OF DRAWINGS

[Fig. 1] is a drawing for describing a wireless communication system.
[Fig. 2] is a drawing illustrating an example of positioning.
[Fig. 3] is a drawing illustrating an example of frequency hopping.
[Fig. 4] is a drawing illustrating an example of a configuration of PRS resource mapping of Rx Hopping Only and Tx/Rx Hopping in an embodiment of the present invention.
[Fig. 5] is a drawing illustrating an example of a mapping method of overlapping frequency hopping resources in the second embodiment.
[Fig. 6] is a drawing illustrating an example of a table including information related to a hopping resource overlap size in the third embodiment.
[Fig. 7] is a drawing illustrating an example of a mapping method of overlapping frequency hopping resources in the third embodiment.
[Fig. 8] is a drawing illustrating an example of a mapping method of overlapping frequency hopping resources in the third embodiment.
[Fig. 9] is a drawing illustrating an example of a mapping method of overlapping frequency hopping resources in the third embodiment.
[Fig. 10] is a drawing illustrating an example of a mapping method of overlapping frequency hopping resources in the third embodiment.
[Fig. 11] is a drawing illustrating an example of a parameter configuration related to an overlap size in the third embodiment.
[Fig. 12] is a drawing illustrating an example of a parameter configuration related to an overlap size in the third embodiment.
[Fig. 13] is a drawing illustrating an example of a table in which a time gap is associated with an overlap size in the fourth embodiment.
[Fig. 14] is a drawing illustrating an example of a mapping method of overlapping frequency hopping resources in the fourth embodiment.
[Fig. 15] is a drawing illustrating an example of a parameter configuration related to an overlap size in the fourth embodiment.
[Fig. 16] is a drawing illustrating an example of a parameter configuration related to an overlap size in the fourth embodiment.
[Fig. 17] is a drawing illustrating an example of a parameter configuration related to an overlap size in the fifth embodiment.
[Fig. 18] is a drawing illustrating an example of a functional structure of a base station in an embodiment of the present invention.
[Fig. 19] is a drawing illustrating an example of a functional structure of a terminal in an embodiment of the present invention.
[Fig. 20] is a drawing illustrating an example of a hardware structure of the base station or the terminal in an embodiment of the present invention.
[Fig. 21] is a drawing illustrating an example of a structure of a vehicle in an embodiment of the present invention.

### DESCRIPTION OF EMBODIMENTS

Hereinafter, one or more embodiments of the present invention will be described by referring to the drawings. It should be noted that the embodiments described below are examples. Embodiments of the present invention are not limited to the following embodiments.

In an operation of a wireless communication system according to an embodiment the present invention, the conventional techniques will be used appropriately. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

In addition, in an embodiment of the present invention, the duplex method may be a TDD (Time Division Duplex) method, an FDD (Frequency Division Duplex) method, or any other method (e.g., Flexible Duplex, or the like).

In addition, in an embodiment of the present invention, the expression, a radio parameter is "configured" may mean that a predetermined value is pre-configured, or may mean that a radio parameter indicated by a base station 10 or a terminal 20 is configured.

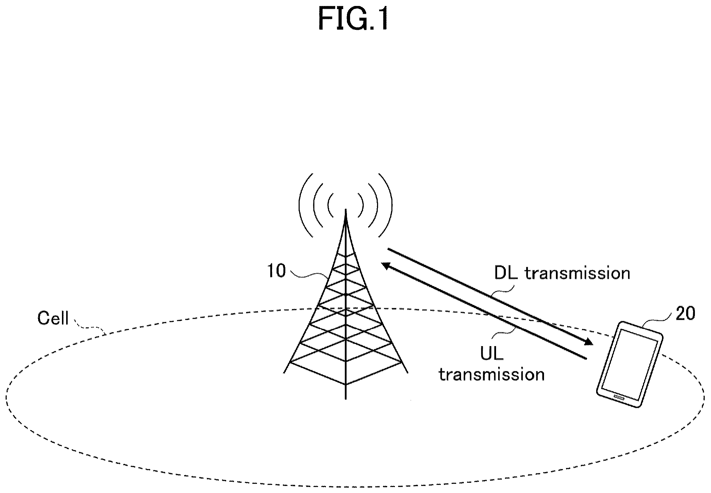

Fig. 1 is a drawing for describing a wireless communication system. As illustrated in Fig. 1, a wireless communication system related to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. It is to be noted that the terminal 20 may be referred to as a UE, and the base station 10 may be referred to as a gNB.

In LTE or NR, a carrier aggregation function using a broad band is supported in order to secure data resources. In the carrier aggregation function, wide band data resources can be allocated by bundling a plurality of component carriers. For example, the bandwidth of 100 MHz can be used by bundling a plurality of bandwidths of 20 MHz.

In the 3GPP standardization, a new device type is being discussed as a reduced capability NR device (hereinafter, also referred to as "RedCap terminal") that has lower cost and lower complexity compared with an eMBB (enhanced Mobile Broadband) device or a URLLC (Ultra-Reliable and Low Latency Communications) device.

For example, the maximum bandwidth supported by the RedCap terminal may be smaller. For example, in FR1 (Frequency Range 1), the maximum bandwidth of the RedCap terminal during and after the initial access may be 20 MHz. For example, in FR2 (Frequency Range 2), the maximum bandwidth of the RedCap terminal during and after the initial access may be 100 MHz.

For example, the RedCap terminal may support a smaller number of reception branches. For example, the number of reception branches supported by the RedCap terminal may be 1 or 2. In addition, the maximum number of MIMO layers supported by the RedCap terminal may be smaller. For example, the number of MIMO layers supported by the RedCap terminal may be 1 or 2. In addition, the modulation order supported by the RedCap terminal may be smaller. For example, supporting of 256QAM (Quadrature amplitude modulation) in FR1 may be optional for the RedCap terminal.

In addition, with respect to the RedCap terminal, supporting of HD-FDD (Half-Duplex Frequency Division Duplex) is being discussed in order to reduce the complexity. In the full-duplex FDD, the DL carrier and the UL carrier are allocated in different frequencies, and the simultaneous transmission and reception can be performed. On the other hand, in the HD-FDD (Half-Duplex Frequency Division Duplex), the DL carriers and the UL carriers are allocated in different frequencies, the simultaneous transmission and reception cannot be performed, and the DL-UL switching time is required. The duplexer can be eliminated in the HD-FDD and a switch and an additional filter are used instead.

In addition, positioning of the terminal 20 according to the LMF (Location Management Function) in the 3GPP Release 16 or 17 Uu interface is performed according to the methods in 1) to 3) described below (refer to Non-Patent Document 2, Non-Patent Document 3, and Non-Patent Document 4).

1) Method based on DL-TDOA (Time Difference of Arrival)
2) Method based on UL-TDOA
3) Method based on multi-RTT (Round Trip Time).

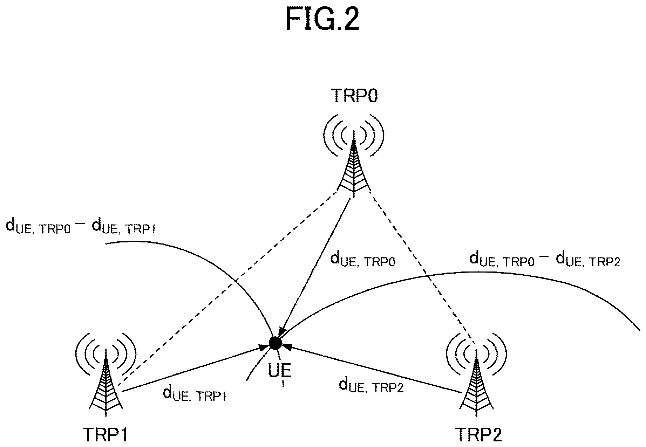

Fig. 2 is a drawing illustrating an example of positioning. As illustrated in Fig. 2, the location information of the UE may be calculated based on DL-TDOA. The location of the UE may be estimated based on DL-RSTD (Received Signal Time Difference) in which the UE measures DL wireless signals transmitted from a plurality of NR TRPs. The geographical locations of the TRPs and the DL transmission timings at the TRPs may be used in the estimation. Furthermore, the location of the UE may be estimated based on RSRP (Reference Signal Received Power) of DL-PRS (Positioning Reference Signal) in addition to DL-RSTD.

In a method based on DL-TDOA, the location of the UE may be calculated by the following procedure.
1) The gNB transmits DL-PRS from each TRP to the UE.
2) The UE reports DL-RSTD that is a measurement result to the GW and/or gNB and/or LMF by using the LPP (LTE Positioning Protocol)
3) The gNB reports the timing information related to the TRP to the LMF by using the NRPPa (NR Positioning Protocol A)
4) The LMF calculates the location of the UE based on the above-described information reported by the UE and the gNB.

For example, as illustrated in Fig. 2, the location of the UE may be calculated based on the geographical location and the DL transmission timing of each of the TRPs by measuring the delay between the UE and the TRP0, the delay between the UE and the TRP1, and the delay between the UE and the TRP2.

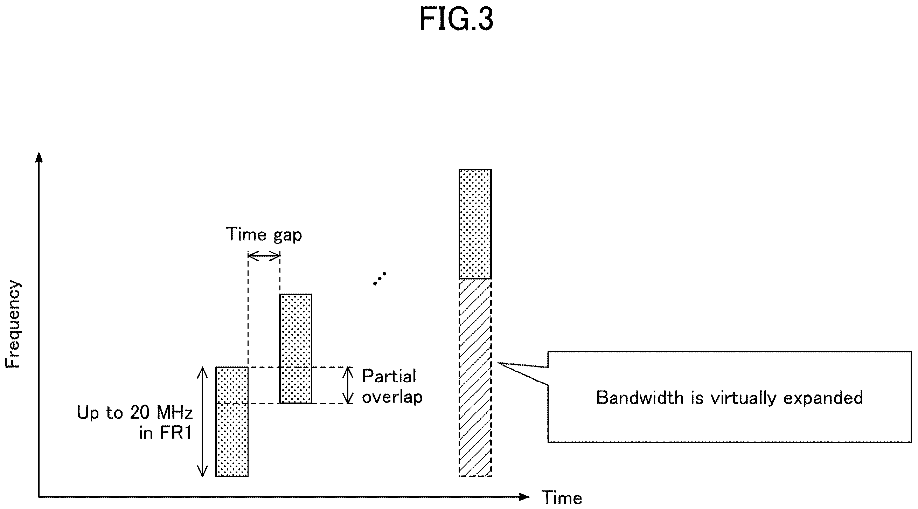

As described above, the maximum bandwidth that is supported by the RedCap terminal and that is being discussed in 3GPP Release 17 is 20 MHz in FR1 (Frequency Range 1) and 100 MHz in FR2 (Frequency Range 2). In order to compensate for the decreased positioning accuracy due to the reduced bandwidth for the RedCap terminal, discussions are being held with respect to application of frequency hopping to PRS/SRS. In the PRS/SRS frequency hopping, positioning is performed by virtually expanding the bandwidth by assuming that the entire bandwidth in which frequency hopping is applied is to be a single large bandwidth signal as illustrated in Fig. 3. In addition, because the positioning accuracy is degraded due to the phase shift between the frequency hopping resources (hopping resources), in order to compensate for the degradation of the positioning accuracy, a method of overlapping is being discussed in which hopping resource frequencies are partially overlapped with each other as illustrated in Fig. 3.

However, in a case where frequency hopping accompanied by resource overlapping is applied to PRS/SRS, how to configure the overlap size between PRS/SRS resources has not been specified yet. As a result, there is a possibility that terminals of the conventional wireless communication system cannot perform transmission and reception of PRS/SRS to which frequency hopping accompanied by resource overlapping is applied.

According to an embodiment of the present invention, a reference signal can be appropriately received based on an expectation in which the overlap size of resources, of a reference signal used for positioning to which frequency hopping accompanied by resource overlapping is applied, is appropriately expected.

According to an embodiment of the present invention, a method of overlapping resources of a reference signal used for positioning to which frequency hopping accompanied by resource overlapping is applied may be specified in the technical specification. The technical specification is, for example, a 3GPP technical specification (e.g.: Technical Specification or Technical Report), and the terminal 20 operates in accordance with the technical specification. In other words, the terminal 20 is expected to use a method of overlapping resources specified in the technical specification, and performs an operation based on the expectation.

An embodiment of the present invention is not limited to be used for the positioning of a RedCap terminal, may be applied to a normal non-RedCap terminal, or may be applied for positioning of a generic NR terminal (UE NR positioning). In an embodiment of the present invention, the reference signal for positioning is mainly expected to be a PRS and an SRS, or another reference signal or another channel may be expected to be used.

Hereinafter, an embodiment of the present invention will be described by mainly using a PRS that is a downlink signal. However, an embodiment of the present invention may be not only applied by changing the PRS parameters but also may be applied to an uplink SRS.

The hopping resources of an embodiment of the present invention are resources in which frequency hopping is applied to the PRB (Physical Resource Block) resources.

### (First embodiment)

According to the first embodiment, the terminal 20 may expect that information related to the hopping resource overlapping is to be configured by a network.

The terminal 20 may expect that at least one of an overlap configuration or information related to the overlapping is to be requested from the terminal 20 to the network.

The terminal 20 may expect that the overlapping frequency width is to be configured by X [Hz/RBs/REs] or is to be specified by resource frequency locations (absolute values of the frequency locations and/or relative values from adjacent resources).

A capability related to overlapping may be configured in the terminal 20. The capability related to overlapping may be configured based on a per-UE/per-FR/per-band/per-PFL (= per-CC) basis. The capability related to overlapping may include, for example, the following 1) to 6).

1) Capability indicating whether or not to support overlapping of hopping
2) Maximum overlap size (that is, the maximum frequency width that can be overlapped)
3) Minimum overlap size (that is, the minimum frequency width that can be overlapped)
4) Range of overlappable size (that is, range of overlappable frequency widths)
5) The number of overlapping resources that can be processed in one resource set
6) Supported positioning method

### (Positioning Method)

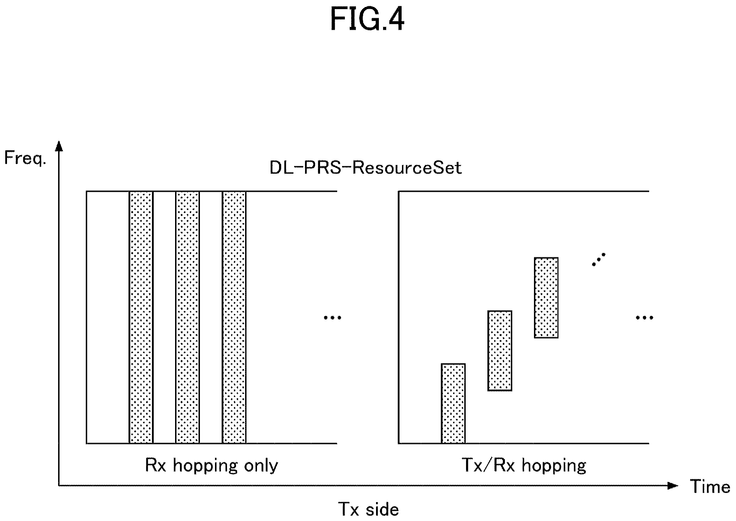

The terminal 20 may expect that the mapping of resources transmitted from a TRP is to be applied. For example, the terminal 20 may expect that the Rx Hopping Only (the resource mapping pattern that is common to the non-RedCap terminal) is to be applied as illustrated in Fig. 4 (on the left side). For example, the terminal 20 may expect that the Tx/Rx Hopping (the pattern in which only PRSs transmitted by using the frequency hopping for the RedCap terminal are mapped) is to be applied as illustrated in Fig. 4 (on the right side).

In this way, in a case where frequency hopping accompanied by resource overlapping is applied to PRS, PRS can be appropriately received by expecting that an overlap size of PRS resources is to be used.

### (Second embodiment)

According to the second embodiment, the terminal 20 may expect that information related to the hopping resource overlapping that is received by the terminal 20 is to be uniquely determined according to the technical specification (for example, 3GPP technical specifications).

In a case where frequency hopping with partial overlapping is configured in a terminal 20, the terminal 20 may expect that the reception is to be performed by applying an overlap of only predetermined frequencies [Hz/RBs/REs] specified by the technical specification.

The information or configuration related to the overlapping (for example, an overlap size that will be described below) may be fixedly specified by the technical specification for each of the terminal types (UE types), such as a Redcap UE, a non-RedCap UE, and a sidelink UE.

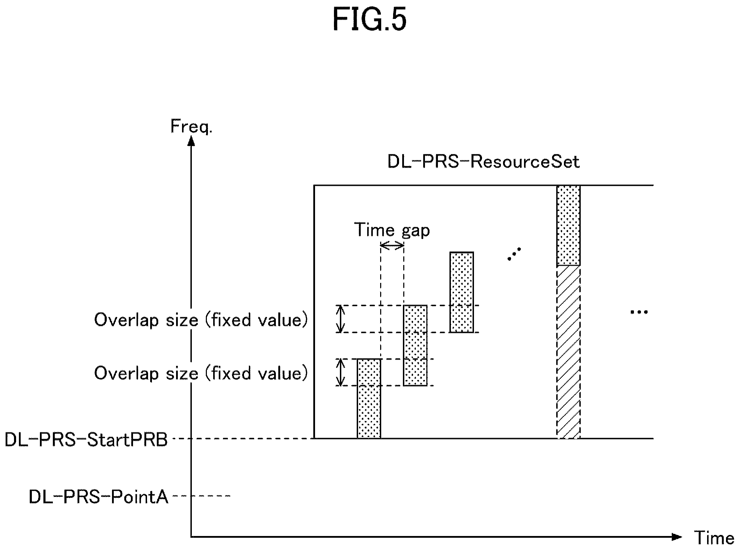

For example, Fig. 5 illustrates a first hopping resource that has a start position, DL-PRS-StartPRB in the frequency direction, and a second hopping resource that is adjacent to the first hopping resource in the time domain with a predetermined time gap. In an example illustrated in Fig. 5, the terminal 20 may expect that the second hopping resource is to be mapped to a resource, based on the resource (for example, an RB or an RE) to which the first hopping resource is mapped and on the overlap size between the first hopping resource and the second hopping resource. Here, the overlap size is specified as a fixed value according to the technical specification, the specification may be expected by the terminal 20, and the terminal 20 may perform a reception process based on this expectation.

### (Third embodiment)

According to the third embodiment, the terminal 20 may expect that a table including information related to the overlapping of hopping resources that are received by the terminal 20 is to be specified according to the technical specification, and that information included in the table is to be selected or configured by a network.

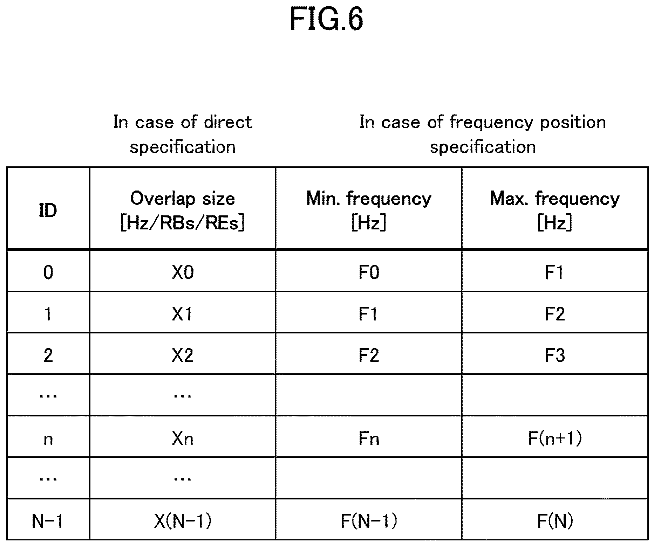

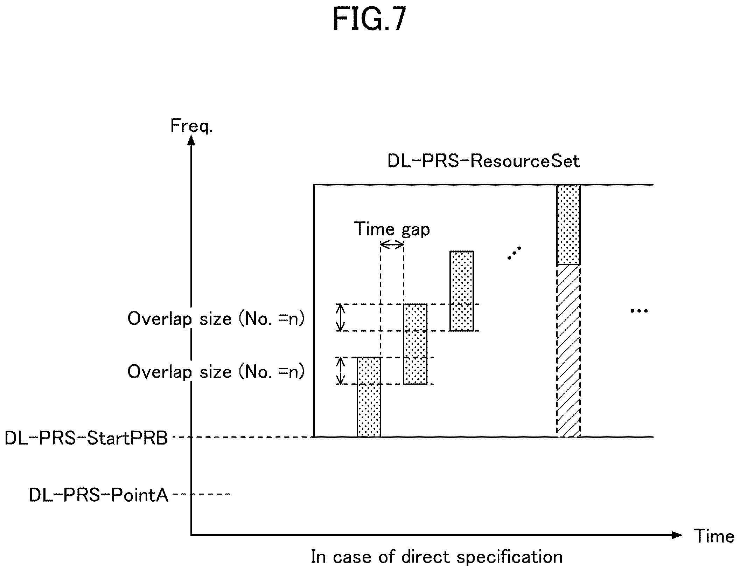

The table in the third embodiment includes, for example, an overlap size [Hz/RBs/REs], an ID for identifying the overlap size, and the minimum frequency and the maximum frequency corresponding to each overlap size as illustrated in Fig. 6. For example, in a case where "frequency hopping with partial overlapping" is configured in a terminal 20 as illustrated in Fig. 7, the terminal 20 may expect to receive PRS resources that are overlapped, based on the overlap size included in the table illustrated in Fig. 6.

The table illustrated in Fig. 6 may be specified for each of the terminal types such as a RedCap UE, a non-RedCap UE, and a sidelink UE.

A request for an overlap size configuration may be transmitted from the terminal 20 to the network (for example, the base station 10).

The terminal 20 may expect that a part of the table illustrated in Fig. 6 is to be limited in accordance with the terminal capability (UE Capability) that is reported from the terminal 20 to the network.

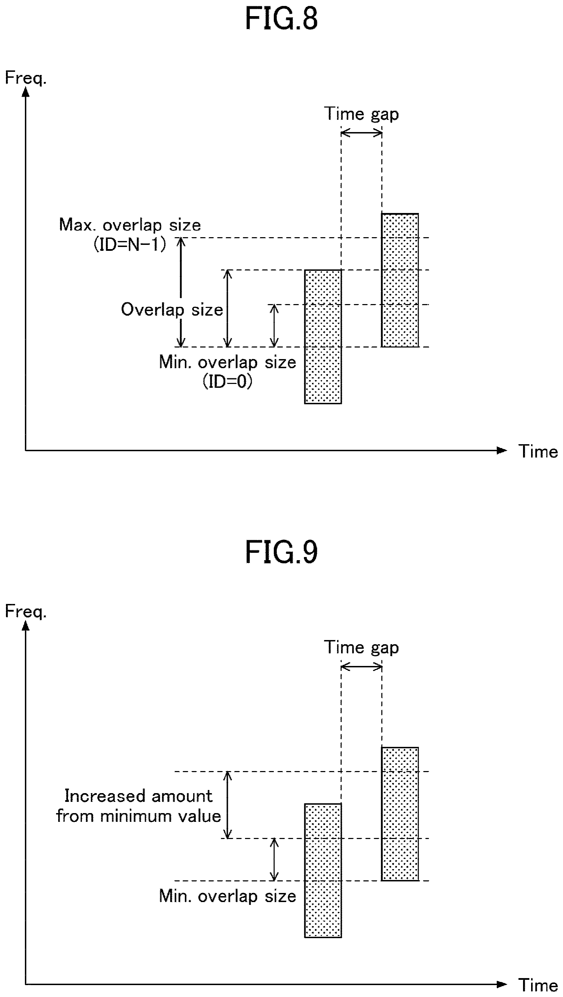

As illustrated in Fig. 8, the configurable overlap sizes themselves may be configured for the table including the information related to the hopping resource overlapping as in a case of direct specification in Fig. 6.

For example, as illustrated in Fig. 9, the configurable minimum overlap size may be specified in advance with respect to the table including the information related to the hopping resource overlapping and the increased amount from the minimum value may be configured.

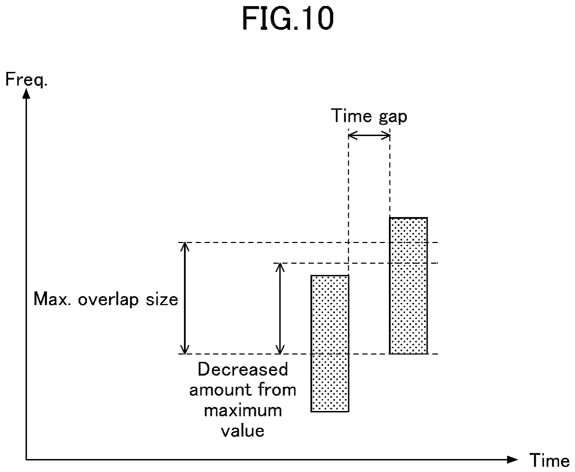

For example, as illustrated in Fig. 10, the configurable maximum overlap size may be specified in advance with respect to the table including the information related to the hopping resource overlapping and the decreased amount from the maximum value may be configured.

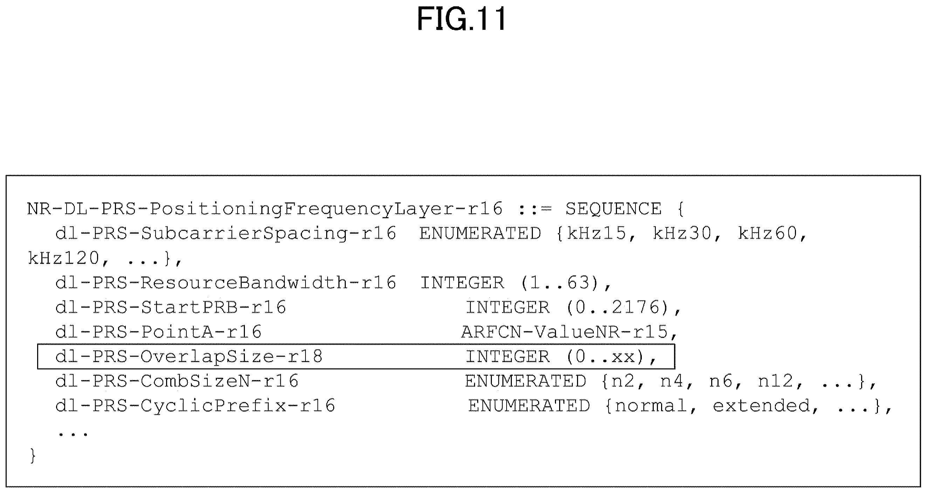

The parameter related to the overlap size may be configured, for example, as a parameter related to the resource mapping in NR-DL-PRS-PositioningFreqncyLayer as illustrated in Fig. 11. In an example illustrated in Fig. 11, dl-PRS-OverlapSize-r18 is a parameter indicating the overlap size. The parameter related to the overlap size may be configured, for example, in a newly specified NR-DL-PRS-PositioningFreqncyLayer-r18.

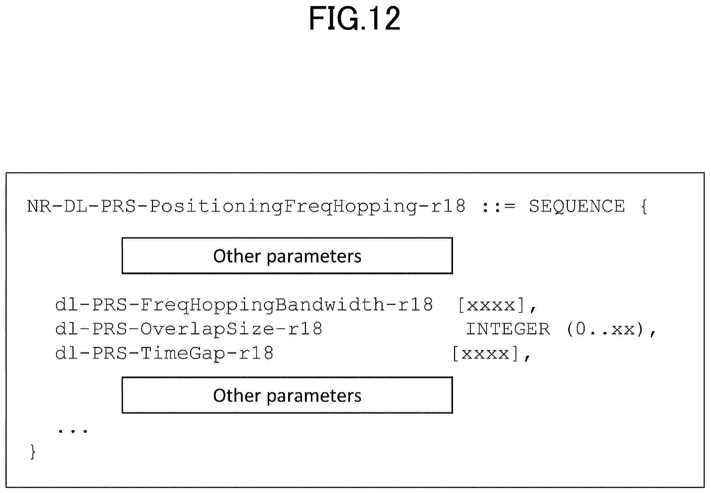

For example, as illustrated in Fig. 12, a dedicated IE (Information Element) as a parameter related to the frequency hopping may be specified, and the parameter related to the overlap size may be configured as an element of the specified IE.

In this way, according to the third embodiment, in a case where frequency hopping accompanied by resource overlapping is applied to a reference signal used for positioning, the reference signal can be appropriately received by the terminal based on an expectation that there is to be an overlap size of overlapped resources of the reference signal.

### (Fourth embodiment)

According to the fourth embodiment, the terminal 20 may expect that information related to the overlapping is to be selected and/or configured by a network, based on the relationship between the parameter related to the reference signal (for example, PRS) and the information related to the overlapping.

The terminal 20 may expect that the parameter related to the overlapping is to be implicitly configured based on the parameter related to the reference signal such as the time gap and/or the number of resources between the adjacent hopping resources. Hereinafter, an example will be described in which the overlap size is determined based on the time gap. It is to be noted that the overlap size is not limited to be determined based on the time gap and may be determined based on the number of resources, for example.

In a case where "frequency hopping with partial overlapping" is configured in the terminal 20 and the time gap amount is configured by the network, the terminal 20 may expect that the overlap size [Hz/RBs/REs] is to be implicitly configured and that the reception is to be performed by causing the resources to be overlapped with each other in the frequency domain.

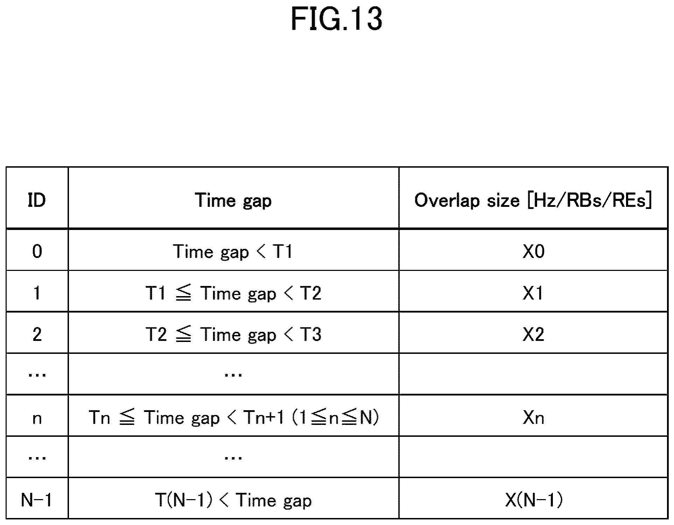

For example, the relationship between the time gap amount and the overlap size may be specified by a table illustrated in Fig. 13, and the overlap size may be selected from the table. It is to be noted that, in an embodiment of the present invention, the terminal 20 is only required to store information in which the time gap amount is associated with the overlap size, and the terminal 20 is not required to store the relationship between the time gap amount and the overlap size in the form of a table.

For example, a relationship formula between the overlap size and the time gap amount may be specified in the technical specification, and the overlap size may be configured based on the relationship formula. For example, the relationship formula may be expressed as follows.

### The overlap size = α × time gap + β (α, β: constant)

For example, the table illustrated in Fig. 13 may be specified for each of the terminal types such as a Redcap UE, a non-RedCap UE, and a sidelink UE.

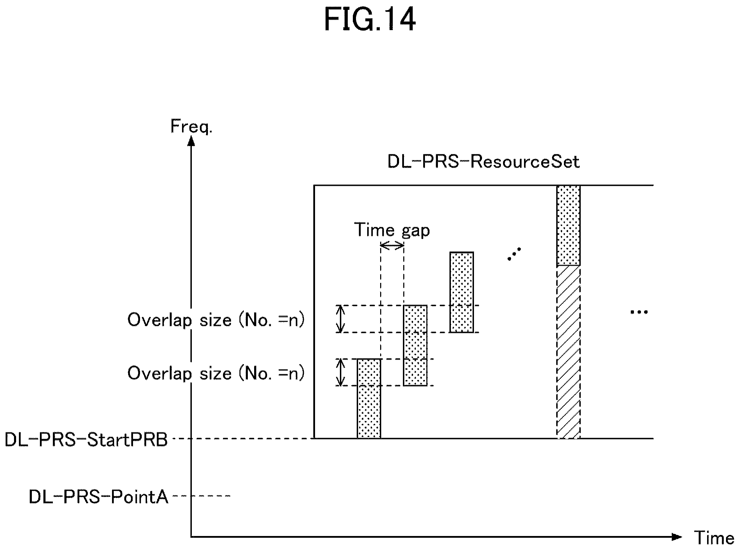

The terminal 20 may expect that the resource mapping is to be performed by using the overlap size that is determined based on the time gap. As illustrated in Fig. 14, the terminal 20 may determine the overlap size of the two overlapped resources, based on the time gap between the two resources (the first resource and the second resource) corresponding to the PRS that are adjacent to each other in the time domain. The terminal 20 may derive the overlap size from the time gap, based on the above-described relationship between the time gap and the overlap size.

The terminal 20 may request the network (base station 10) to configure the overlap size.

The terminal 20 may report the configurable time gap amount as a terminal capability (UE capability) to the network. The terminal 20 may expect that the overlap size corresponding to the configurable time gap amount is to be configured.

The terminal 20 may expect that the information related to the overlapping is to be selected and/or configured by the network, based on the relationship between the parameter related to the reference signal and the information related to the overlapping.

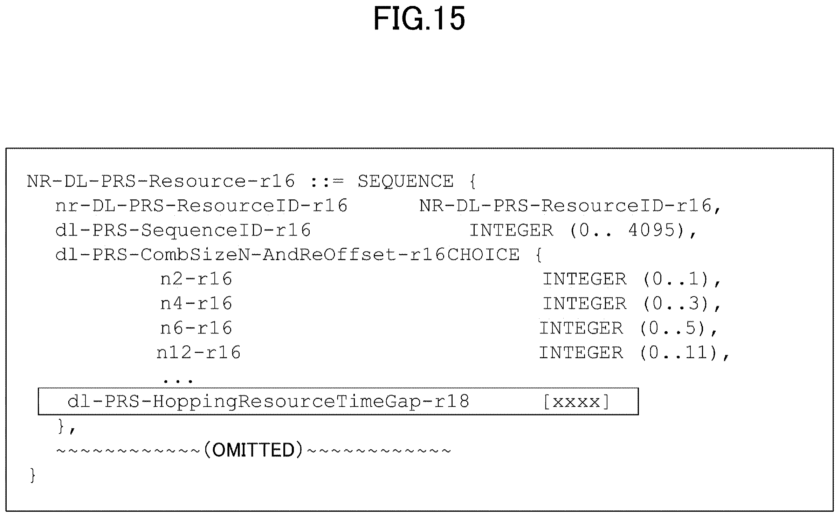

With respect to the parameter related to the overlap size, for example, the time gap amount may be configured as a parameter related to the resource mapping in NR-DL-PRS-Resource as illustrated in Fig. 15. In an example illustrated in Fig. 15, dl-PRS-HoppingResourceTimeGap-r18 is a parameter indicating the time gap amount. The parameter related to the overlap size may be configured in a newly specified NR-DL-PRS-Resource-r18.

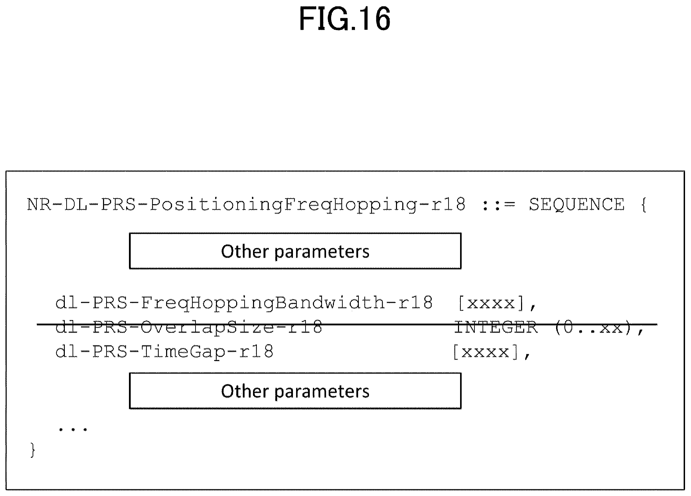

For example, as illustrated in Fig. 16, a dedicated IE may be specified as a parameter related to the frequency hopping and the time gap amount may be configured as an element of the specified IE.

In this way, according to the fourth embodiment, in a case where frequency hopping accompanied by resource overlapping is applied to a reference signal used for positioning, the terminal can appropriately receive the reference signal based on an expectation that there is to be an expected overlap size of overlapped resources of the reference signal.

### (Fifth embodiment)

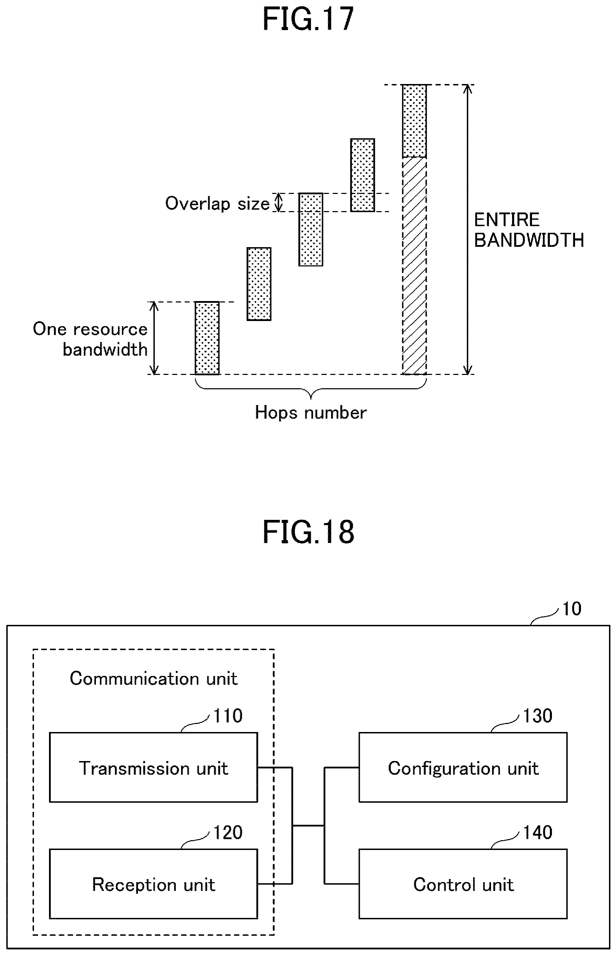

According to the fifth embodiment, as illustrated in Fig. 17, the terminal 20 may expect that the overlap size is to be not explicitly configured in the terminal 20, and that the overlap size is to be configured based on the entire bandwidth in which frequency hopping is applied to the resources and on the number of hopping resources.

In a case where "frequency hopping with partial overlapping" is configured in the terminal 20 and the entire bandwidth in which frequency hopping is applied and the number of hopping resources are configured by the network, the terminal 20 may expect that the overlap size [Hz/RBs/REs] is to be implicitly configured and that the reception is to be performed by causing the resources to be overlapped with each other in the frequency domain.

For example, in a case where the maximum bandwidth of the RedCap terminal is configured to be 20 MHz per resource, the entire hopping bandwidth is configured to be 80 MHz, and the number of hops of the hopping resources is configured to be 5, the terminal 20 may implicitly expect that the resources are to be received by causing the resources to be overlapped with each other by 5 MH. The maximum bandwidth of the RedCap terminal per resource, the entire hopping bandwidth, and the number of hops of the hopping resources are examples of the parameter. The number of hops may be a number of resources for which hopping is applied in the PRS resource set, or may be a number of resources for which hopping is applied in a freely selected range of the time domain.

A relationship formula between each parameter and the overlap size may be specified by the technical specification, and each parameter may be configured based on the relationship formula. An example of the relationship formula will be described below.

The entire bandwidth = bandwidth per resource × the number of hops - the overlap size × (the number of hops - 1)

For example, the above-described parameters may be specified for each of the terminal types such as a Redcap UE, a non-RedCap UE, and a sidelink UE.

The terminal 20 may explicitly request the network to configure the overlap size.

The terminal 20 may report the configurable parameter as a terminal capability (UE capability) to the network. The terminal 20 may expect that the overlap size corresponding to the configurable parameter is to be configured.

In this way, according to the fifth embodiment, in a case where frequency hopping accompanied by resource overlapping is applied to a reference signal used for positioning, the terminal can appropriately receive the reference signal based on an expectation that there is to be an expected overlap size of overlapped resources of the reference signal.

It is to be noted that "PRS (Positioning Reference Signal)" may be replaced with "DL-PRS", "UL-PRS (for example, SRS for positioning or SRS)", or the like.

"SRS" may be replaced with "SRS for MIMO", "SRS for positioning", or the like.

"PFL" may be replaced with "CC", or the like. "Network" may be replaced with "gNB", "TRP", "LMF", or the like.

"Configured by the network" or "indicated by the network" may be replaced with "configured by RRC signaling", "activated/deactivated/updated by MAC-CE", "indicated by DCI", or the like.

The overlapping of frequencies, bands, or resources may be replaced with "stitching", "concatenation", or the like.

### <Configurations related to an embodiment of the present invention>

### (1st item)

A terminal includes: a control unit configured to determine a size of an overlap in a frequency domain between a first resource and a second resource, the first resource and the second resource corresponding to a reference signal used for positioning, and frequency hopping being applied to the reference signal; and a reception unit configured to receive the reference signal, based on the determined size. The control unit determines the size of the overlap between the first resource and the second resource, based on a gap in a time domain between the first resource and the second resource.

### (2nd item)

In the terminal as described in the first item, the control unit determines the size additionally based on an entire bandwidth of hopping resources and a number of the hopping resources.

### (3rd item)

In the terminal as described in the first item, the size is determined based on at least one of a minimum value or a maximum value of an overlap size configurable for the terminal.

### (4th item)

In the terminal as described in the first item, the reference signal is a PRS (Positioning Reference Signal).

### (5th item)

A communication method performed by a terminal includes: determining a size of an overlap in a frequency domain between a first resource and a second resource, the first resource and the second resource corresponding to a reference signal used for positioning, and frequency hopping being applied to the reference signal; and receiving the reference signal, based on the determined size. The determining includes determining the size of the overlap between the first resource and the second resource, based on a gap in a time domain between the first resource and the second resource.

### (6th item)

A wireless communication system includes: a base station; and a terminal, wherein the base station transmits a reference signal used for positioning, frequency hopping being applied to the reference signal, and the terminal determines a size of an overlap in a frequency domain between a first resource and a second resource, the first resource and the second resource corresponding to the reference signal, and receives the reference signal, based on the determined size. The terminal determines the size of the overlap between the first resource and the second resource, based on a gap in a time domain between the first resource and the second resource.

According to any one of the above-described configurations, in a case where frequency hopping accompanied by resource overlapping is applied to a reference signal used for positioning, the terminal can appropriately receive the reference signal based on an expectation that there is to be an expected overlap size of overlapped resources of the reference signal.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base station 10 and the terminal 20 may include only some of the functions in an embodiment.

### <Base station 10>

Fig. 18 is a diagram illustrating an example of a functional configuration of the base station 10. As shown in Fig. 18, the base station 10 includes a transmission unit 110, a reception unit 120, a configuration unit 130, and a control unit 140. The functional configuration illustrated in Fig. 18 is merely an example. Functional divisions and names of functional units may be any division and name as long as operations related to an embodiment of the present invention can be performed.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, DL reference signals, and the like to the terminal 20.

The configuration unit 130 stores preset configuration information and various configuration information items to be transmitted to the terminal 20 in a storage apparatus and reads the preset configuration information from the storage apparatus as necessary. Contents of the configuration information are, for example, information related to configuration of D2D communication, etc.

The control unit 140 performs processing related to the configuration in which the terminal 20 performs D2D communication as described in an embodiment of the present invention. In addition, the control unit 140 transmits scheduling of D2D communication and DL communication to the terminal 20 through the transmission unit 110. In addition, the control unit 140 receives information related to the HARQ response of the D2D communication and the DL communication from the terminal 20 via the reception unit 120. The functional units related to signal transmission in the control unit 140 may be included in the transmission unit 110, and the functional units related to signal reception in the control unit 140 may be included in the reception unit 120.

### <Terminal 20>

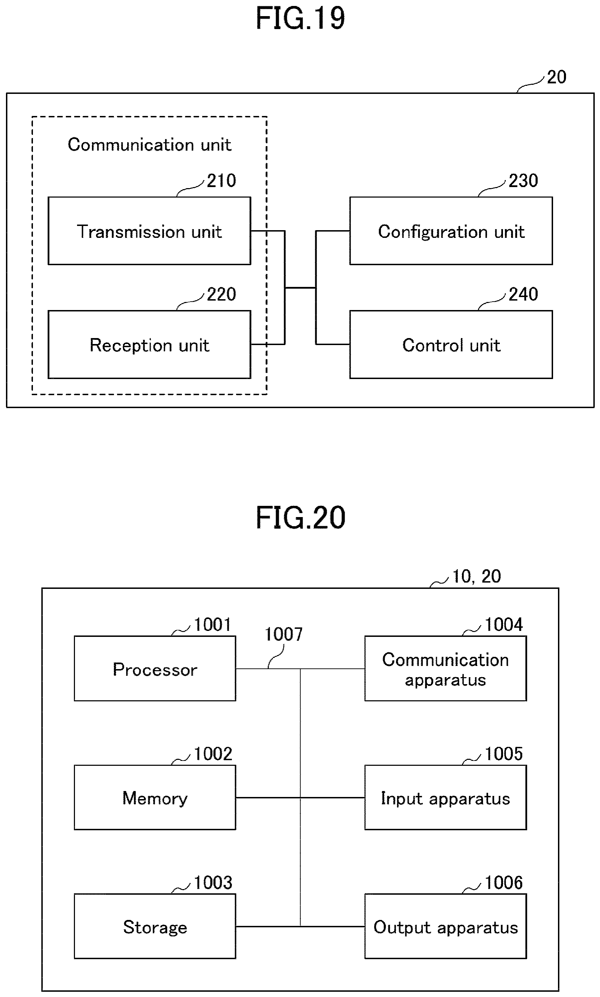

Fig. 19 is a diagram illustrating an example of a functional configuration of the terminal 20. As shown in Fig. 19, the terminal 20 includes a transmission unit 210, a reception unit 220, a configuration unit 230, and a control unit 240. The functional configuration illustrated in Fig. 19 is merely an example. Functional divisions and names of functional units may be any division and name as long as operations related to an embodiment of the present invention can be performed.

The above-described transmission and reception mechanism (module) of LTE-SL and the above-described transmission and reception mechanism (module) of NR-SL may each include the transmission unit 210, the reception unit 220, the configuration unit 230, and the control unit 240.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, reference signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information received from the base station 10 or the terminal 20 by the reception unit 220 in the storage apparatus and reads them from the storage apparatus as necessary. In addition, the configuration unit 230 also stores pre-configured configuration information. Contents of the configuration information are, for example, information related to configuration of D2D communication, etc.

The control unit 240 controls D2D communication for establishing RRC connection with another terminal 20 as described in an embodiment of the present invention. Further, the control unit 240 performs processing related to the power-saving operation. Further, the control unit 240 performs HARQ related processing of the D2D communication and DL communication. Further, the control unit 240 transmits, to the base station 10, information related to the HARQ response of the D2D communication to the other terminal 20 and the DL communication scheduled by the base station 10. Further, the control unit 240 may perform scheduling of D2D communication for another terminal 20. In addition, the control unit 240 may autonomously select a resource to be used for D2D communication from the resource selection window, based on the sensing result, or may perform reevaluation or preemption. Further, the control unit 240 performs processing related to power saving in transmission and reception of D2D communications. In addition, the control unit 240 performs processing related to inter-terminal coordination in D2D communication. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 18 and Fig. 19) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

For example, the base station 10, the terminal 20, etc., according to an embodiment of the present disclosure may function as a computer for processing the radio communication method of the present disclosure. Fig. 20 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 18 may be implemented by control programs that are stored in the memory 1002 and that operate on the processor 1001. In addition, for example, the control unit 240 of the terminal 20 illustrated in Fig. 19 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be implemented by physically or logically being divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

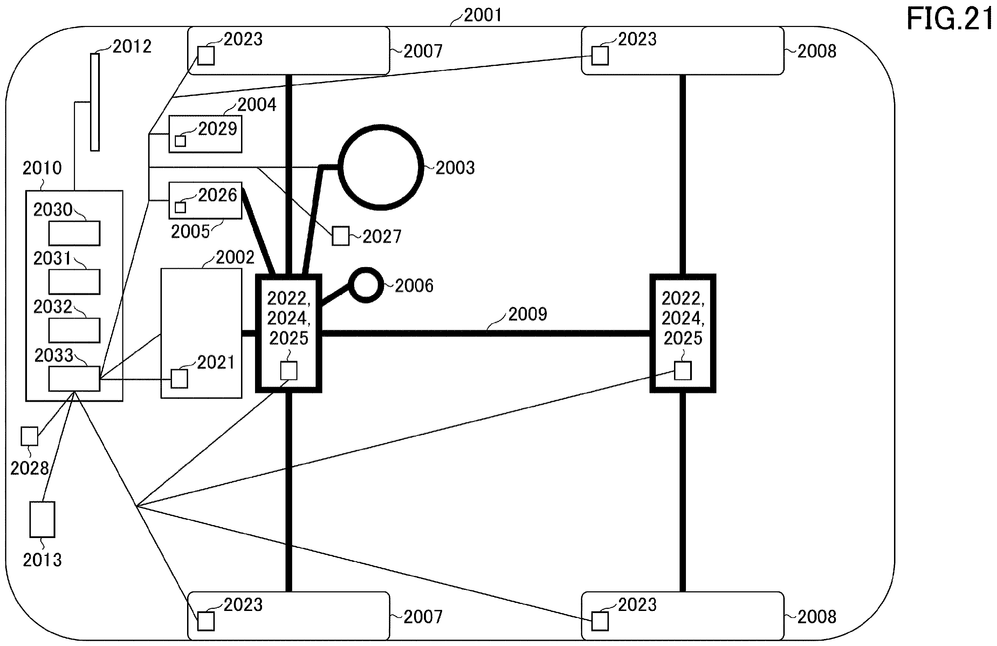

Fig. 21 shows an example of a configuration of a vehicle 2001. As shown in Fig. 21, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above-described embodiments. A person skilled in the art should understand that there are various modifications, variations, alternatives, replacements, etc. of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station may be a vehicle (e.g., a car, an airplane, etc.), an unmanned mobile body (e.g., a drone, an automated vehicle, etc.), or a robot (manned or unmanned). Note that at least one of a base station or a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

The numerology may be a communication parameter applied to at least one of transmission and reception of a certain signal or channel. The numerology may indicate at least one of a subcarrier spacing (SCS), a bandwidth, a symbol length, a cyclic prefix length, a transmission time interval (TTI), the number of symbols per TTI, a radio frame structure, a specific filtering process performed by a transceiver in the frequency domain, a specific windowing process performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). A slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource area including one subcarrier and one symbol.

A bandwidth part (BWP) (which may be also referred to as a fractional bandwidth, and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a UL BWP and a DL BWP. One or a plurality of BWPs may be configured in one carrier for a terminal 20.

At least one of configured BWPs may be active, and a terminal 20 is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a control unit configured to determine a size of an overlap in a frequency domain between a first resource and a second resource, the first resource and the second resource corresponding to a reference signal used for positioning, and frequency hopping being applied to the reference signal; and
a reception unit configured to receive the reference signal, based on the determined size, wherein
the control unit determines the size of the overlap between the first resource and the second resource, based on a gap in a time domain between the first resource and the second resource.

2. The terminal as claimed in claim 1, wherein
the control unit determines the size additionally based on an entire bandwidth of hopping resources and a number of the hopping resources.

3. The terminal as claimed in claim 1, wherein
the size is determined based on at least one of a minimum value or a maximum value of an overlap size configurable for the terminal.

4. The terminal as claimed in claim 1, wherein
the reference signal is a PRS (Positioning Reference Signal).

5. A communication method performed by a terminal, the communication method comprising:
determining a size of an overlap in a frequency domain between a first resource and a second resource, the first resource and the second resource corresponding to a reference signal used for positioning, and frequency hopping being applied to the reference signal; and
receiving the reference signal, based on the determined size, wherein
the determining includes determining the size of the overlap between the first resource and the second resource, based on a gap in a time domain between the first resource and the second resource.

6. A communication system comprising: a base station; and a terminal, wherein
the base station transmits a reference signal used for positioning, frequency hopping being applied to the reference signal, and
the terminal determines a size of an overlap in a frequency domain between a first resource and a second resource, the first resource and the second resource corresponding to the reference signal, and
receives the reference signal, based on the determined size, and wherein
the terminal determines the size of the overlap between the first resource and the second resource, based on a gap in a time domain between the first resource and the second resource.
